# EUROPÄISCHE PATENTSCHRIFT

(11) **EP 0 650 500 B1**
(45) Veröffentlichungstag und Bekanntmachung des Hinweises auf die Patenterteilung: **02.05.1997**
(21) Anmeldenummer: 93912645.4
(22) Anmeldetag: 02.07.1993
(51) Int. Cl.: C08G 18/00, C08G 59/40, C08G 59/02

(54) **VERFAHREN ZUR HERSTELLUNG EINER OXAZOLIDINONSTRUKTUREN AUFWEISENDEN PREPOLYMEREN EPOXIDHARZMISCHUNG**
PROCESS FOR THE PREPARATION OF A PREPOLYMER EPOXY RESIN MIXTURE WITH OXAZOLIDINONE STRUCTURES
PROCEDE DE PREPARATION D'UN MELANGE PREPOLYMERE DE RESINES EPOXY A STRUCTURES OXAZOLIDINONIQUES

(30) Priorität: 17.07.1992 DE 4223630
(43) Veröffentlichungstag der Anmeldung: 03.05.1995
(73) Patentinhaber: SIEMENS AKTIENGESELLSCHAFT, 80333 München (DE)
(72) Erfinder: MARKERT, Helmut, D-90461 Nürnberg (DE); DATZ, Armin, D-91099 Poxdorf (DE); DONNER, Peter, D-91334 Hemhofen (DE); SCHREYER, Michael, D-91085 Weisendorf (DE)
(86) Internationale Anmeldenummer: DE9300583
(87) Internationale Veröffentlichungsnummer: WO9402524

(56) Entgegenhaltungen:
- EP-A- 0 296 450
- WO-A-90/15089
- DE-A- 2 359 386
- DE-A- 3 328 134

## Beschreibung

Die Erfindung betrifft ein Verfahren zur Herstellung einer Oxazolidinonstrukturen aufweisenden prepolymeren Epoxidharzmischung.

Aus der WO 90/15089 ist es bekannt, epoxyterminierte Polyoxazolidinone (dort vereinfacht als Polyoxazolidone bezeichnet) durch Umsetzung einer Polyepoxidverbindung mit einer Polyisocyanatverbindung bei erhöhter Temperatur in Gegenwart eines Katalysators herzustellen. Dazu werden 5 bis 30 Gew.-% der Polyisocyanatverbindung innerhalb von 30 bis 90 min zu einem Gemisch von 70 bis 95 Gew.-% der Polyepoxidverbindung und 0,01 bis 2 Gew.-% des Katalysators gegeben, und das dabei erhaltene Reaktionsgemisch wird dann für die Dauer von 5 bis 180 min auf eine Temperatur von 110 bis 200°C erhitzt. Das Verfahren wird - durch Regulierung verschiedener Prozeßparameter - in der Weise durchgeführt, daß beim resultierenden epoxyterminierten Polyoxazolidinon, das auch als isocyanatmodifiziertes Epoxidharz bezeichnet wird, 50 bis 100 % der ursprünglichen Isocyanatgruppen in Oxazolidinonringe umgewandelt sind und 0 bis 50 % in Isocyanuratringe.

Als Polyepoxidverbindung dient beim bekannten Verfahren insbesondere Bisphenol A und Tetrabrombisphenol A, die Polyisocyanatverbindung ist 4,4'-Methylen-bis(phenylisocyanat) (MDI) oder ein Isomeres davon, polymeres MDI oder Toluylendiisocyanat. Als Katalysator (für die Reaktion zwischen der Polyepoxid- und der Polyisocyanatverbindung) eignet sich vor allem eine Imidazolverbindung oder Tetraphenylphosphoniumbromid; die Katalysatorkonzentration beträgt vorzugsweise 0,02 bis 1 Gew.-%, insbesondere 0,02 bis 0,1 Gew.-%, bezogen auf das Gesamtgewicht von Polyepoxid- und Polyisocyanatverbindung.

Zur Herstellung der Polyoxazolidinone wird in der Weise vorgegangen, daß der Katalysator, gegebenenfalls gelöst in einem geeigneten Lösungsmittel, der Polyepoxidverbindung zugesetzt wird, im allgemeinen bei einer Temperatur unterhalb der Reaktionstemperatur von 110 bis 200°C. Die Temperatur wird dann auf die Reaktionstemperatur angehoben und dort gehalten, während die Polyisocyanatverbindung kontrolliert zugegeben, d.h. zugetropft wird.

In ähnlicher Weise wird bei einem aus der EP 0 296 450 A1 bekannten Verfahren zur Herstellung von Oxazolidinongruppen enthaltenden (dort vereinfacht als Oxazolidongruppen bezeichnet) oligomeren Polyepoxiden aus Bisepoxiden und Diisocyanaten vorgegangen. Bei diesem Verfahren werden - bei 140 bis 180°C in Gegenwart eines Phosphoniumsalzes als Katalysator - entweder Bisepoxidether mit OH-Gruppen entsprechend einer OH-Zahl von mindestens 2 mit aromatischen Diisocyanaten, welche zwei unterschiedlich reaktive NCO-Gruppen in einer Menge von mindestens 1/4 des Gewichts des Diisocyanats aufweisen, oder Bisepoxidester mit OH-Gruppen entsprechend einer OH-Zahl von mindestens 2 mit aromatischen, aliphatischen oder cycloaliphatischen Diisocyanaten in einem Mengenverhältnis von NCO-Gruppen zu Epoxidgruppen von 1:1,4 bis 1:2,5 umgesetzt. Der Katalysator wird dabei in einer Menge von 0,005 bis 1,0 Gew.-% eingesetzt, bevorzugt 0,01 bis 0,5 Gew.-%, bezogen auf Bisepoxid.

Wesentlich ist bei diesem Verfahren, daß die Oxazolidinon-Epoxidharze nur dann erhalten werden, wenn OH-gruppenhaltige Epoxidharze zusammen mit ungleich reaktive NCO-Gruppen enthaltenden Diisocyanaten - unter Phosphoniumsalzkatalyse - bei ca. 160°C zur Reaktion gebracht werden. Zur Herstellung der Polyepoxide wird dabei in der Weise vorgegangen, daß das Bisepoxidharz zusammen mit dem Katalysator unter Stickstoff auf 160°C aufgeheizt wird. Zu der Schmelze wird dann das Diisocyanat zugetropft, und zwar so schnell, daß eine Temperatur von ca. 170°C eingehalten wird. Nach der Zugabe des gesamten Diisocyanats wird bei 160°C nachgerührt, bis der berechnete Epoxidwert erreicht und kein reaktives NCO mehr nachweisbar ist.

Beide bekannte Verfahren sind nur für Ansatzgrößen im Labormaßstab beschrieben. Wesentlich dabei ist, daß das Polyisocyanat nur tropfenweise zum katalysatorhaltigen Polyepoxid zugegeben wird. Es ist deshalb kaum möglich, die angegebenen Verfahren - im technischen Maßstab - in wirtschaftlicher Weise durchzuführen. Ferner gelangen bei diesen Verfahren nur füllstofffreie Reaktionsharzmischungen zum Einsatz.

Aufgabe der Erfindung ist es, ein technisches Verfahren zur Herstellung einer Oxazolidinonstrukturen aufweisenden prepolymeren Epoxidharzmischung, die lagerstabil, löslich bzw. schmelzbar, latent reaktiv und härtbar ist, anzugeben.

Dies wird erfindungsgemäß dadurch erreicht, daß einem kontinuierlich arbeitenden Reaktor ein isocyanatgruppenfreies unlösliches Reaktionsharzpulver, bestehend aus einer Reaktionsbeschleuniger und Füllstoff enthaltenden, Isocyanuratstrukturen aufweisenden Epoxidharzmischung, zugeführt und bei Reaktionstemperaturen bis 200°C umgesetzt wird, wobei die Temperatur des Reaktors 140 bis 190°C beträgt, und daß das Extrudat mit Hilfe einer an der Austrittsdüse des Reaktors angebrachten Kühlvorrichtung auf eine Temperatur < 50°C abgekühlt wird.

Beim Verfahren nach der Erfindung eignet sich als kontinuierlich arbeitender Reaktor insbesondere ein Doppelschneckenextruder. Von Vorteil ist dabei, wenn beim Extruder das Verhältnis der Schneckenlänge zum äußeren Schneckendurchmesser 20 bis 50 und insbesondere 25 bis 40 beträgt. Darüber hinaus wird der Extruder vorzugsweise so ausgelegt, daß die Masseverweilzeit bei Schneckendrehzahlen > 10 min⁻¹ kleiner als 5 min ist, vorzugsweise kleiner als 3 min, und eine minimale axiale Rückströmung entsteht.

Das isocyanatgruppenfreie unlösliche Reaktionsharzpulver kann mit einem Doppelschneckendosiergerät in den Doppelschneckenextruder eindosiert werden, beispielsweise mit einem Massefluß von 150 g/min. Der Extruder enthält förderaktive Schneckenelemente (Schneckendurchmesser beispielsweise 31,8 mm, Schneckenlänge 880 mm) und ist mit fünf thermostatisierbaren Zylinderzonen ausgestattet, die beispielsweise auf 160°C aufgeheizt werden. Bei einer Schneckendrehzahl von 90 min⁻¹ ergibt sich beispielsweise eine Masseverweilzeit < 1 min. Das durch eine Breitschlitzdüse austretende Extrudat wird auf eine gekühlte Abgleitschiene geführt und rasch auf Temperaturen unter 50°C abgekühlt, wobei die Epoxidharzmischung zu bandförmigen Endlosstreifen erstarrt. Diese Streifen werden auf einem Abzugsband unter eine Gegenrolle gezogen und dadurch grob zerkleinert. Das vorzerkleinerte Produkt wird in einer Feinprallmühle auf die gewünschte Korngröße gemahlen. Die auf diese Weise hergestellte rieselfähige, lagerstabile, lösliche bzw. schmelzbare, latent reaktive prepolymere Epoxidharzmischung, die Oxazolidinonstrukturen aufweist, wird unter Ausschluß von Feuchtigkeit gelagert.

Beim erfindungsgemäßen Verfahren gelangt ein isocyanatgruppenfreies unlösliches Reaktionsharzpulver zum Einsatz. Zur Herstellung dieses Reaktionsharzpulvers dient eine Füllstoff enthaltende, thermisch polymerisierbare Reaktionsharzmischung von Polyepoxidharz und Polyisocyanatharz mit einem Molverhältnis der Epoxidgruppen zu den Isocyanatgruppen > 1, vorzugsweise 1,5 bis 4,0. Das Polyepoxidharz ist eine Mischung von di- und mehrfunktionellen Epoxidharzen, wobei das Molverhältnis von mehrfunktionellem zu difunktionellem Epoxidharz, bezogen auf die Epoxidgruppen, 0,1 bis 1,7 und vorzugsweise 0,2 bis 0,75 beträgt. Die Reaktionsharzmischung aus Polyepoxid- und Polyisocyanatharz wird unter Verwendung von substituiertem Imidazol als Reaktionsbeschleuniger, mit einem Gehalt - bezogen auf Polyepoxidharz - von 0,5 bis 2,5 %, bei Temperaturen bis zu 180°C umgesetzt.

Während beim Stand der Technik, wie insbesondere aus den Ausführungsbeispielen hervorgeht, geringe Katalysatorkonzentrationen verwendet werden, nämlich 0,01 bis 0,35 % (WO 90/15089) bzw. 0,1 % (EP 0 296 450 A1), jeweils bezogen auf Polyepoxid, werden zur Herstellung von reaktiven, härtbaren prepolymeren Epoxidharzmischungen wesentlich höhere Katalysatormengen benötigt. Beim erfindungsgemäßen Verfahren beträgt die Katalysatorkonzentration deshalb 0,5 bis 2,5 %, bevorzugt 1,0 bis 1,8 %, bezogen auf die Mischung der di- und mehrfunktionellen Epoxidharze. Diese hohen Katalysatorkonzentrationen sind erforderlich, damit die latent reaktive prepolymere Epoxidharzmischung ohne eine - bei füllstoffhaltigen Systemen aufwendige - Nachbeschleunigung in einer technisch relevanten Zeit gehärtet werden kann.

Zur Herstellung des isocyanatgruppenfreien unlöslichen Reaktionsharzpulvers im Technikumsmaßstab eignet sich ein Mischbehälter, vorzugsweise ein Vertikalkneter, für größere Mengen wird ein kontinuierlich arbeitender Reaktor verwendet. Die Aufbereitung und Verarbeitung der Reaktionsharzmischung in einem Vertikalkneter wird auf folgende Weise durchgeführt. Die di- und mehrfunktionellen Epoxidharze sowie das Polyisocyanatharz werden im Vertikalkneter, der mit einem thermostatisierbaren und evakuierbaren Knettrog sowie mit Knetschaufeln ausgerüstet ist und eine kontinuierliche Temperaturmessung in der Reaktionsharzmischung erlaubt, vorgelegt, auf Temperaturen bis 100°C erwärmt, unter Rühren gemischt und entgast. In die erwärmte Reaktionsharzmischung werden portionsweise der Füllstoff und gegebenenfalls weitere Additive eingetragen und - unter weiterem Rühren - bei einer Temperatur bis 100°C unter vermindertem Druck mindestens 1 h entgast. Anschließend wird der Reaktionsbeschleuniger eingemischt. Dann wird die Temperatur des Mischbehälters auf 160 bis 180°C eingestellt. Die Umsetzung der Reaktionsharzmischung zum Reaktionsharzpulver erfolgt in der Regel ab Reaktionstemperaturen von 130°C innerhalb weniger Minuten, wobei im Mischbehälter durch das ständige Rühren ein rieselfähiges Produkt entsteht. Zum Abbruch der Reaktion wird die Temperatur des Mischbehälters mit Hilfe eines Kühlthermostaten rasch abgesenkt und das Reaktionsharzpulver unter Rühren auf Temperaturen unter 50°C gebracht. In Vorversuchen wird der Umsatz der Epoxidgruppen festgelegt, der zum Zeitpunkt des Reaktionsabbruches vorliegen soll. IR-spektroskopisch wird nachgewiesen, daß im Reaktionsharzpulver keine Isocyanatgruppen mehr vorhanden sind. Das auf diese Weise erhaltene rieselfähige, lagerstabile, unlösliche Reaktionsharzpulver kann je nach Bedarf über längere Zeit unter Ausschluß von Feuchtigkeit zwischengelagert werden.

Bei Verwendung eines kontinuierlich arbeitenden Reaktors zur Herstellung des isocyanatgruppenfreien unlöslichen Reaktionsharzpulvers kann die Aufbereitung der Reaktionsharzmischung und deren Zuführung zum Reaktor auf verschiedene Weise erfolgen. Im einen Fall werden - zur Herstellung einer Harzkomponente - die di- und mehrfunktionellen Epoxidharze sowie das Polyisocyanatharz und der Füllstoff in einem thermostatisierbaren und evakuierbaren Mischbehälter unter Rühren bei Temperaturen bis 100°C entgast. In einem zweiten Mischbehälter wird - zur Herstellung einer Beschleunigerkomponente - der Reaktionsbeschleuniger in einer der in der Rezeptur vorgesehenen Harzkomponenten oder einer Teilmenge davon unter Entgasen gelöst bzw. dispergiert. Die beiden Komponenten werden dann einem statischen Mischrohr zugeführt, und die aus dem Mischrohr austretende Reaktionsharzmischung wird in den Reaktor eindosiert.

Im anderen Fall wird die Harzkomponente wie im ersten Fall aufbereitet. Zur Herstellung der Beschleunigerkomponente wird der Reaktionsbeschleuniger mit einer Teilmenge des in der Rezeptur vorgesehenen Füllstoffes intensiv gemischt. Die beiden Komponenten werden dann beispielsweise mittels einer Schlauchpumpe bzw. eines Doppelschneckenpulverdosiergerätes in einen Doppelschneckenextruder eindosiert. Im Gegensatz zu dem bereits beschriebenen Doppelschneckenextruder enthält der zur Herstellung des unlöslichen Reaktionsharzpulvers verwendete Extruder sowohl förderaktive Schnecken- als auch Knetelemente und ist mit einer größeren Anzahl an thermostatisierbaren Zylinderzonen ausgestattet.

Die Reaktion der Harz- und der Beschleunigerkomponente zum isocyanatgruppenfreien unlöslichen Reaktionsharzpulver wird vorzugsweise bei niedrigeren Temperaturen durchgeführt als die Umsetzung des Reaktionsharzpulvers zur prepolymeren Epoxidharzmischung. Das lagerstabile, rieselfähige Reaktionsharzpulver läßt sich in einfacher Weise ohne aufwendige Dosiersysteme in den kontinuierlich arbeitenden Reaktor eindosieren. So können beispielsweise zur Produktoptimierung ohne großen Aufwand rieselfähige Mischungen von Reaktionsharzpulvern unterschiedlicher Zusammensetzung oder auch Abmischungen mit Füllstoffen und/oder Additiven in den kontinuierlich arbeitenden Reaktor eindosiert und verarbeitet werden.

Zur Herstellung des unlöslichen Reaktionsharzpulvers wird, wie bereits ausgeführt, eine Polyepoxidharzmischung verwendet, d.h. eine Mischung von di- und mehrfunktionellen Epoxidharzen. Als Epoxidharze eignen sich dabei insbesondere Bisphenol A- und Bisphenol F-Epoxidharze sowie Phenolnovolak- und Kresolnovolak-Epoxidharze bzw. Siliconepoxidharze, Triglycidylisocyanurat, Tetraglycidyldiaminodiphenylmethan und Polyglycidylphosphorharze. Als Siliconepoxidharze dienen insbesondere Verbindungen folgender Struktur: 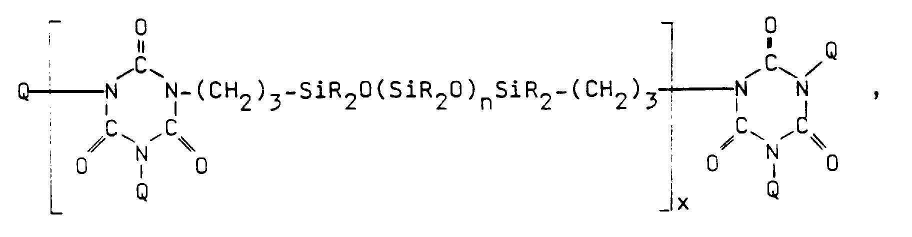 wobei folgendes gilt:
n ist eine ganze Zahl von 0 bis 25,
x ist eine ganze Zahl von 0 bis 3,
R = Alkyl oder Aryl,
Q = -(CH₂)₃SiR₂O(SiR₂O)ₙSiR₂R',
   wobei n und R die vorstehend angegebene Bedeutung haben und R' ein epoxyfunktioneller Rest mit 6 C-Atomen ist.

Der Gehalt an Siliconepoxidharz beträgt bis zu 20 %, vorzugsweise 1 bis 7 %, jeweils bezogen auf die füllstofffreie Reaktionsharzmischung aus Polyepoxid- und Polyisocyanatharz.

Als Polyisocyanatharz werden vorzugsweise Isomerengemische von Diisocyanatodiphenylmethan eingesetzt. Geeignet sind beispielsweise aber auch Isomerengemische von Toluylendiisocyanat und Prepolymere von Isomerengemischen des Diisocyanatodiphenylmethans. Ferner können Mischungen der genannten Polyisocyanatharze verwendet werden.

Als Reaktionsbeschleuniger finden beim erfindungsgemäßen Verfahren substituierte Imidazole Verwendung. Dabei gelangen vorzugsweise 2-Ethyl-4-methylimidazol, 2-Phenylimidazol und 1-Cyanoethyl-2-phenylimidazol zum Einsatz. Weitere geeignete Reaktionsbeschleuniger sind beispielsweise 1,2-Dimethylimidazol, 1-Cyanoethyl-2-methylimidazol, 2-Isopropylimidazol und 1-Benzyl-2-phenylimidazol. Der Gehalt an Reaktionsbeschleuniger beträgt, bezogen auf Polyepoxidharz, d.h. auf die Mischung der di- und mehrfunktionellen Epoxidharze, 0,5 bis 2,5 %, vorzugsweise 1,0 bis 1,8 %.

Als Füllstoff eignen sich insbesondere mineralische Füllstoffe, wie Quarzgut in splittriger und/oder sphärischer Kornform (unterschiedlicher Korngrößenverteilung). Des weiteren können keramische Füllstoffe, wie Aluminiumoxid, sowie Mischungen von keramischen Füllstoffen und mineralischen Füllstoffen verwendet werden. Geeignet sind auch faserförmige Füllstoffe, wie Kurzglasfasern.

Das erfindungsgemäße Verfahren unterscheidet sich gravierend in der Zusammensetzung der Reaktionsharzmischung aus Polyepoxidharz und Polyisocyanatharz von den beim Stand der Technik eingesetzten Reaktionsmischungen. Zur Herstellung der Reaktionsharzmischung werden nämlich Mischungen von di- und mehrfunktionellen Epoxidharzen verwendet, d.h. von Epoxidharzen unterschiedlichen chemischen Aufbaus und unterschiedlicher Funktionalität. Solche Mischungen sind aus dem Stand der Technik aber nicht bekannt. Darüber hinaus sind dort weder der besonders geeignete Reaktionsbeschleuniger 1-Cyanoethyl-2-phenylimidazol noch die - für die Verarbeitungseigenschaften wichtigen - Siliconepoxidharze der genannten Art und das - zur Anhebung der Glasübergangstemperatur besonders geeignete - Tetraglycidyldiaminodiphenylmethan angegeben.

Die Herstellung von rieselfähigen, lagerstabilen, isocyanatgruppenfreien, Isocyanuratstrukturen aufweisenden Reaktionsharzpulvern aus einer Mischung von di- und mehrfunktionellen Epoxidharzen mit Polyisocyanatharz in einem Molverhältnis der Epoxidgruppen zu den Isocyanatgruppen > 1 unter Verwendung von substituiertem Imidazol als Reaktionsbeschleuniger ist bislang nicht beschrieben. Bekannt ist die Herstellung von Beschleuniger und Füllstoff enthaltenden Harzmischungen aus bei Raumtemperatur festen Epoxid- und Isocyanatharzen und einer Imidazolverbindung, wobei die Komponenten durch Kneten bei 80°C gemischt werden (siehe dazu: JP-OS 50-059499 und JP-OS 51-128400). Diese beschleunigerhaltigen Harzmischungen werden bei Temperaturen bis 180°C unter Formgebung gehärtet. Im Gegensatz zum erfindungsgemäßen Verfahren werden dabei nicht isocyanatgruppenfreie unlösliche Reaktionsharzpulver hergestellt, sondern schmelzbare Harzmischungen, die unter Formgebung verarbeitet werden.

Für den Fachmann war nicht vorhersehbar, daß aus dem unlöslichen, isocyanatgruppenfreien (chemisch vernetzten) Reaktionsharzpulver - entsprechend dem erfindungsgemäßen Verfahren - durch Reaktionsextrusion eine lösliche bzw. schmelzbare prepolymere Epoxidharzmischung herstellbar ist. Überraschenderweise führen hierbei die im Reaktionsharzpulver enthaltenen mehrfunktionellen Epoxidharze, wie die angegebenen Siliconepoxidharze und Tetraglycidyldiaminodiphenylmethan, sowie die Anwendung hoher Beschleunigerkonzentrationen und Temperaturen bis 200°C nicht zu einer weiteren Härtung des Reaktionsharzpulvers, sondern zu einer lagerstabilen, löslichen bzw. schmelzbaren, härtbaren Epoxidharzmischung, die ohne - bei füllstoffhaltigen Reaktionsharzen aufwendige - Nachbeschleunigung gehärtet werden kann.

Anhand von Ausführungsbeispielen soll die Erfindung noch näher erläutert werden.

### Beispiel 1

### Herstellung eines isocyanatgruppenfreien unlöslichen Reaktionsharzpulvers

In einen Vertikalkneter werden 1530 g Bisphenol A-Epoxidharz (Epoxidwert: 5,78 mol/kg), 99 g eines Siliconepoxids (Epoxidwert: 1,9 mol/kg), hergestellt nach Beispiel 9 der EP-OS 0 399 199, 495 g Tetraglycidyldiaminodiphenylmethan (Epoxidwert: 8,2 mol/kg) und 360 g eines Isomerengemisches von Diisocyanatodiphenylmethan (Isocyanatwert: 7,9 mol/kg) gegeben, dann wird auf 80°C erwärmt und unter Rühren gemischt. Nachfolgend werden zur Mischung unter Rühren portionsweise 4347 g sphärisches Quarzgut, 1863 g splittriges Quarzgut und 90 g Ruß gegeben; anschließend wird 1 h bei 80°C unter Rühren entgast. In die Reaktionsharzmischung werden 33,3 g 1-Cyanoethyl-2-phenylimidazol eindosiert, dann wird 10 min unter Rühren entgast. Nachfolgend wird die Temperatur des Mischbehälters auf 160°C eingestellt und die Reaktionsharzmischung unter Rühren erwärmt. Die Reaktion zum Reaktionsharzpulver startet bei ca. 130°C; der Reaktionsverlauf wird durch Temperaturmessung ständig verfolgt. Der Abbruch der Reaktion erfolgt 1 min nach dem Festwerden der Reaktionsharzmischung, und zwar durch Abkühlen des Mischbehälters mittels eines Kühlthermostaten. Die Temperatur des Reaktionsharzes wird dann unter weiterem Rühren unter 50°C abgesenkt. Durch das fortgesetzte Rühren fällt das unlösliche Reaktionsharz als rieselfähiges, lagerstabiles Pulver an (Epoxidwert: 1,28 mol/kg). IR-spektroskopisch wird nachgewiesen, daß in diesem Produkt keine Isocyanatgruppen mehr vorhanden sind.

### Beispiel 2

### Herstellung einer Oxazolidinonstrukturen aufweisenden prepolymeren Epoxidharzmischung

Das nach Beispiel 1 hergestellte isocyanatgruppenfreie unlösliche Reaktionsharzpulver wird mit Hilfe eines Pulverdosiergerätes mit einem kontinuierlichen Massefluß von 30 g/min einem gleichsinnig laufenden Doppelschneckenextruder zugeführt (Schneckenlänge: 880 mm, äußerer Schneckendurchmesser: 31,8 mm); die Schnecken des Extruders sind ausschließlich aus Förderelementen aufgebaut. Die fünf Zylinderzonen des Extruders sind auf 160°C eingestellt; dabei ergeben sich in den einzelnen Zylinderzonen folgende Temperaturen: Zone 1: 152°C, Zone 2: 158°C, Zone 3: 160°C, Zone 4: 160°C, Zone 5:155°C. Die Schneckendrehzahl beträgt 90 min⁻¹, wodurch sich eine Masseverweilzeit im Extruder von 1,0 min ergibt. Das Extrudat wird durch eine Doppelschlitzdüse (Querschnitt: je 2 mm x 20 mm) ausgetragen, durch eine gekühlte Abgleitschiene auf eine Temperatur unterhalb 50°C abgekühlt und auf einem angeschlossenen elastischen Abzugsband durch eine Gegenrolle grob zerkleinert. Das vorzerkleinerte Extrudat wird mittels einer Feinprallmühle auf die gewünschte Korngröße gemahlen. Die dabei erhaltene rieselfähige, latent reaktive, härtbare prepolymere Epoxidharzmischung (Epoxidwert: 0,86 mol/kg; Aufschmelzbereich: 75 bis 95°C) wird bei Raumtemperatur unter Ausschluß von Feuchtigkeit gelagert.

### Beispiel 3

### Herstellung eines isocyanatgruppenfreien unlöslichen Reaktionsharzpulvers

In einen Vertikalkneter werden 825,2 g Bisphenol A-Epoxidharz (Epoxidwert: 5,78 mol/kg), 50,1 g eines Siliconepoxids (Epoxidwert: 1,9 mol/kg), hergestellt nach Beispiel 9 der EP-OS 0 399 199, 262,1 g Tetraglycidyldiaminodiphenylmethan (Epoxidwert: 8,2 mol/kg) und 286,4 g eines Isomerengemisches von Diisocyanatodiphenylmethan (Isocyanatwert: 7,9 mol/kg) gegeben, dann wird auf 85°C erwärmt und unter Rühren gemischt. Nachfolgend werden zur Mischung unter Rühren portionsweise 7560 g Aluminiumoxid (Korngröße < 150 um) gegeben; anschließend wird 1 h bei 85°C entgast. In die Reaktionsharzmischung werden 16,2 g 2-Phenylimidazol eindosiert, dann wird 10 min unter Rühren entgast. Nachfolgend wird die Reaktionsharzmischung in entsprechender Weise wie in Beispiel 1 weiterbehandelt. Dabei wird ein isocyanatgruppenfreies unlösliches Reaktionsharz in Form eines rieselfähigen Pulvers erhalten (Epoxidwert: 0,7 mol/kg).

### Beispiel 4

### Herstellung einer Oxazolidinonstrukturen aufweisenden prepolymeren Epoxidharzmischung

Das nach Beispiel 3 hergestellte isocyanatgruppenfreie unlösliche Reaktionsharzpulver wird mit Hilfe eines Pulverdosiergerätes mit einem kontinuierlichen Massefluß von 60 g/min einem Doppelschneckenextruder entsprechend Beispiel 2 zugeführt. Die fünf Zylinderzonen des Extruders sind auf 165°C eingestellt; dabei ergeben sich in den einzelnen Zylinderzonen folgende Temperaturen: Zone 1: 155°C, Zone 2: 162°C, Zone 3: 165°C, Zone 4: 165°C, Zone 5: 159°C. Die Schneckendrehzahl beträgt 95 min⁻¹, wodurch sich eine Masseverweilzeit im Extruder von 0,9 min ergibt. Bei der weiteren Vorgehensweise entsprechend Beispiel 2 wird eine rieselfähige, latent reaktive, härtbare prepolymere Epoxidharzmischung erhalten (Epoxidwert: 0,49 mol/kg; Aufschmelzbereich: 75 bis 95°C), die bei Raumtemperatur unter Ausschluß von Feuchtigkeit gelagert wird.

### Beispiel 5

### Herstellung eines isocyanatgruppenfreien unlöslichen Reaktionsharzpulvers

In einen thermostatisierbaren und evakuierbaren Mischbehälter (Nutzinhalt: 20 1) werden zur Herstellung einer Harzkomponente 2550 g Bisphenol A-Epoxidharz (Epoxidwert: 5,78 mol/kg), 155 g eines Siliconepoxids (Epoxidwert: 1,9 mol/kg), hergestellt nach Beispiel 9 der EP-OS 0 399 199, 810 g Tetraglycidyldiaminodiphenylmethan (Epoxidwert: 8,2 mol/kg) und 885 g eines Isomerengemisches von Diisocyanatodiphenylmethan (Isocyanatwert: 7,9 mol/kg) gegeben, dann wird auf 60°C erwärmt und unter Rühren gemischt. Nachfolgend werden zur Mischung unter Rühren portionsweise 6195 g sphärisches Quarzgut, 2655 g splittriges Quarzgut und 135 g Ruß gegeben; anschließend wird 1 h bei 60°C unter Rühren entgast. Zur Herstellung einer Beschleunigerkomponente werden 1050 g sphärisches Quarzgut, 450 g splittriges Quarzgut, 15 g Ruß und 55,5 g 1-Cyanoethyl-2-phenylimidazol homogen gemischt. Die Harzkomponente wird mittels einer Schlauchpumpe bei einem kontinuierlichen Massefluß von 42 g/min, die Beschleunigerkomponente mittels einer Doppelschneckendosiereinrichtung bei einem kontinuierlichen Massefluß von 5 g/min in einen Doppelschneckenextruder eindosiert. Der Doppelschneckenextruder ist um ein Mischteil vor dem Verfahrensteil und um ein Austragsteil im Anschluß an das Verfahrensteil verlängert; das Extrudat wird ohne Verwendung einer Extrusionsdüse aus dem Extruder ausgetragen. Die Schneckenlänge beträgt 1232 mm, der äußere Schneckendurchmesser 31,8 mm. Die Schnecken des Extruders sind folgendermaßen aufgebaut: Die Einzugszone enthält fördernde Schneckenelemente, in der anschließenden Mischzone sind Knetelemente, im Verfahrensteil fördernde Schneckenelemente und am Ende der Schnecken nochmals Knetelemente vorgesehen, um das Extrudat auf eine einheitliche Korngröße zu zerkleinern und aus dem offenen Extruder auszutragen. Die sieben Zylinderzonen des Extruders sind auf folgende Temperatur eingestellt: Zone 1 (Mischzone): 62°C, Zone 2: 110°C, Zonen 3 bis 7: 150°C. Die Schneckendrehzahl beträgt 80 min⁻¹, wodurch sich eine Masseverweilzeit im Doppelschneckenextruder von 1,3 min ergibt. Das Extrudat wird durch eine gekühlte Abgleitschiene auf 40°C abgekühlt. Das erhaltene isocyanatgruppenfreie unlösliche Reaktionsharzpulver (Epoxidwert: 1,38 mol/kg) wird bei Raumtemperatur gelagert.

### Beispiel 6

### Herstellung einer Oxazolidinonstrukturen aufweisenden prepolymeren Epoxidharzmischung

Das nach Beispiel 5 hergestellte isocyanatgruppenfreie unlösliche Reaktionsharzpulver wird mit Hilfe eines Pulverdosiergerätes mit einem kontinuierlichen Massefluß von 150 g/min einem Doppelschneckenextruder entsprechend Beispiel 2 zugeführt. Die fünf Zylinderzonen des Extruders sind auf 170°C eingestellt; dabei ergeben sich in den einzelnen Zylinderzonen folgende Temperaturen: Zone 1: 162°C, Zone 2: 166°C, Zone 3: 170°C, Zone 4:170°C, Zone 5: 163°C. Die Schneckendrehzahl beträgt 100 min⁻¹, wodurch sich eine Masseverweilzeit im Extruder von 0,8 min ergibt. Bei der weiteren Vorgehensweise entsprechend Beispiel 2 wird eine rieselfähige, latent reaktive, härtbare prepolymere Epoxidharmischung erhalten (Epoxidwert: 0,84 mol/kg; Aufschmelzbereich: 75 bis 95°C), die bei Raumtemperatur unter Ausschluß von Feuchtigkeit gelagert wird.

## Patentansprüche

1. Verfahren zur Herstellung einer Oxazolidinonstrukturen aufweisenden prepolymeren Epoxidharzmischung, **dadurch gekennzeichnet**, daß einem kontinuierlich arbeitenden Reaktor ein isocyanatgruppenfreies unlösliches Reaktionsharzpulver, bestehend aus einer Reaktionsbeschleuniger, mit einem Gehalt von 0,5 bis 2,5 %, bezogen auf Epoxidharz, und Füllstoff enthaltenden, Isocyanuratstrukturen aufweisenden Epoxidharzmischung, zugeführt und bei Reaktionstemperaturen bis 200°C umgesetzt wird, wobei die Temperatur des Reaktors 140 bis 190°C beträgt, und daß das Extrudat mit Hilfe einer an der Austrittsdüse des Reaktors angebrachten Kühlvorrichtung auf eine Temperatur < 50°C abgekühlt wird.

2. Verfahren nach Anspruch 1, **dadurch gekennzeichnet**, daß das Reaktionsharzpulver aus einer Füllstoff enthaltenden, thermisch polymerisierbaren Reaktionsharzmischung von Polyepoxidharz, bestehend aus einer Mischung von di- und mehrfunktionellen Epoxidharzen, und Polyisocyanatharz mit einem Molverhältnis der Epoxidgruppen zu den Isocyanatgruppen > 1 bei Temperaturen, bis 180°C unter Verwendung von substituiertem Imidazol als Reaktionsbeschleuniger hergestellt wird.

3. Verfahren nach Anspruch 2, **dadurch gekennzeichnet**, daß das Reaktionsharzpulver in einem Kneter oder einem kontinuierlich arbeitenden Reaktor hergestellt wird.

4. Verfahren nach einem der Ansprüche 1 bis 3, **dadurch gekennzeichnet**, daß als Epoxidharz ein Bisphenol A- oder Bisphenol F-Epoxidharz, ein Phenolnovolak- oder Kresolnovolak-Epoxidharz, ein Siliconepoxidharz, Triglycidylisocyanurat, Tetraglycidyldiaminodiphenylmethan oder ein Polyglycidylphosphorharz verwendet wird.

5. Verfahren nach einem oder mehreren der Ansprüche 1 bis 4, **dadurch gekennzeichnet**, daß in der Epoxidharzmischung das Molverhältnis von mehrfunktionellem zu difunktionellem Epoxidharz, bezogen auf die Epoxidgruppen, 0,2 bis 0,75 beträgt.

6. Verfahren nach einem oder mehreren der Ansprüche 1 bis 5, **dadurch gekennzeichnet**, daß als Polyisocyanatharz ein Isomerengemisch von Diisocyanatodiphenylmethan oder von Toluylendiisocyanat oder ein Frepolymer eines Isomerengemisches von Diisocyanatediphenylmethan verwendet wird.

7. Verfahren nach einem oder mehreren der Ansprüche 1 bis 6, **dadurch gekennzeichnet**, daß als Reaktionsbeschleuniger 2-Ethyl-4-methylimidazol, 2-Phenylimidazol oder 1-Cyanoethyl-2-phenylimidazol verwendet wird.

8. Verfahren nach einem oder mehreren der Ansprüche 1 bis 7, **dadurch gekennzeichnet**, daß mineralische Füllstoffe, wie Quarzgut, und/oder keramische Füllstoffe, wie Aluminiumoxid, verwendet werden.

9. Verfahren nach einem oder mehreren der Ansprüche 1 bis 8, **dadurch gekennzeichnet**, daß als kontinuierlich arbeitender Reaktor ein Doppelschneckenextruder verwendet wird, bei dem das Verhältnis der Schneckenlänge zum äußeren Schneckendurchmesser 20 bis 50, vorzugsweise 25 bis 40, beträgt.

10. Verfahren nach Anspruch 9, **dadurch gekennzeichnet**, daß ein Reaktor verwendet wird, bei dem die hellen aus förderaktiven Schneckenelementen bzw. aus förderaktiven Schnecken- und Knetelementen bestehen und die Masseverweilzeit - bei Drehzahlen > 10 min⁻¹ und minimaler axialer Rückströmung - < 5 min ist, vorzugsweise < 3 min.

## Claims

1. A process for the preparation of a prepolymeric epoxy resin mixture containing oxazolidinone structures, characterised in that an isocyanate group-free, insoluble reaction resin powder comprising a reaction accelerator in an amount of 0.5 to 2.5% based on epoxy resin, and filler-containing epoxy resin mixture containing isocyanurate structures is fed into a continuous reactor and reacted at reaction temperatures up to 200°C, the temperature of the reactor being 140 to 190°C, and in that the extrudate is cooled to a temperature of < 50°C by means of a cooling device attached to the outlet die of the reactor.

2. A process according to claim 1, characterised in that the reaction resin powder is prepared from a filler-containing, heat-polymerisable reaction resin mixture of polyepoxy resin, comprising a mixture of di- and polyfunctional epoxy resins, and polyisocyanate resin with a molar ratio of epoxy groups to isocyanate groups of > 1 at temperatures up to 180°C using substituted imidazole as reaction accelerator.

3. A process according to claim 2, characterised in that the reaction resin powder is prepared in a kneader or a continuous reactor.

4. A process according to one of claims 1 to 3, characterised in that the epoxy resin used is a bisphenol A or bisphenol F epoxy resin, a phenol novolak or cresol novolak epoxy resin, a silicone epoxy resin, triglycidylisocyanurate, tetraglycidyldiaminodiphenylmethane or a polyglycidylphosphorus resin.

5. A process according to one or more of claims 1 to 4, characterised in that the molar ratio of polyfunctional to difunctional epoxy resin in the epoxy resin mixture is 0.2 to 0.75, based on epoxy groups.

6. A process according to one or more of claims 1 to 5, characterised in that the polyisocyanate resin used is an isomer mixture of diisocyanatodiphenylmethane or of toluene diisocyanate or a prepolymer of an isomer mixture of diisocyanatodiphenylmethane.

7. A process according to one or more of claims 1 to 6, characterised in that the reaction accelerator used is 2-ethyl-4-methylimidazole, 2-phenylimidazole or 1-cyanoethyl-2-phenylimidazole.

8. A process according to one or more of claims 1 to 7, characterised in that mineral fillers such as fused quartz, and/or ceramic fillers such as aluminium oxide are used.

9. A process according to one or more of claims 1 to 8, characterised in that the continuous reactor is a twin-screw extruder in which the ratio of the screw length to the external screw diameter is 20 to 50, preferably 25 to 40.

10. A process according to claim 9, characterised in that a reactor is used in which the shafts consist of conveying screw elements or conveying screw and kneading elements and the residence time of the material is < 5 min, preferably < 3 min at speeds of > 10 min⁻¹ and with minimum axial backflow.

## Revendications

1. Procédé pour la préparation d'un mélange prépolymère de résine époxy à structures oxazolidinoniques, caractérisé en ce qu'on introduit, dans un réacteur travaillant de manière continue, une poudre de résine de réaction insoluble exempte de groupes isocyanates, constituée d'un mélange de résine époxy à structures isocyanurates contenant un accélérateur de réaction, avec une teneur de 0,5 à 2,5 %, par rapport à la résine époxy, et une matière de charge, et en ce qu'on effectue la réaction à des températures de réaction jusqu'à 200°C, la température du réacteur s'élevant à 140 à 190°C, et en ce que l'extrudat est refroidi à l'aide d'un dispositif de refroidissement fixé à la buse de sortie du réacteur à une température < 50 °C.

2. Procédé selon la revendication 1, caractérisé en ce que la poudre de résine de réaction est préparée à partir d'un mélange de résine de réaction thermiquement polymérisable et contenant une matière de charge, de résine polyépoxy, constituée d'un mélange de résines époxy di- et poly-fonctionnelles, et de résine polyisocyanate avec un rapport molaire des groupes époxy aux groupes isocyanates > 1, à des températures jusqu'à 180 °C, en utilisant de l'imidazole substitué à titre d'accélérateur de réaction.

3. Procédé selon la revendication 2, caractérisé en ce que la poudre de résine de réaction est préparée dans un malaxeur ou dans un réacteur travaillant de manière continue.

4. Procédé selon l'une quelconque des revendications 1 à 3, caractérisé en ce qu'on utilise à titre de résine époxy une résine époxy de bisphénol A ou de bisphénol F, une résine époxy de novolaque phénolique ou de novolaque crésolique, une résine époxy de silicone, l'isocyanurate triglycidylique, le tétraglycidyldiaminodiphénylméthane ou une résine de polyglycidylphosphore.

5. Procédé selon une ou plusieurs des revendications 1 à 4, caractérisé en ce que, dans le mélange de résine époxy, le rapport molaire de la résine époxy polyfonctionnelle à la résine époxy difonctionnelle, par rapport aux groupes époxy, s'élève à 0,2 à 0,75.

6. Procédé selon une ou plusieurs des revendications 1 à 5, caractérisé en ce que, à titre de résine polyisocyanate, on utilise un mélange d'isomères de diisocyanatodiphénylméthane ou de diisocyanate de toluène ou un prépolymère d'un mélange d'isomères de diisocyanatodiphénylméthane.

7. Procédé selon une ou plusieurs des revendications 1 à 6. caractérisé en ce que, à titre d'accélérateur de réaction, on utilise le 2-éthyl-4-méthylimidazole, le 2-phénylimidazole ou le 1-cyanoéthyl-2-phénylimidazole.

8. Procédé selon une ou plusieurs des revendications 1 à 7, caractérisé en ce qu'on utilise des matières de charge minérales, telles que la silice vitreuse et/ou des matières de charge céramiques, telles que l'oxyde d'aluminium.

9. Procédé selon une ou plusieurs des revendications 1 à 8, caractérisé en ce que, à titre de réacteur travaillant de manière continue. on utilise une extrudeuse à double vis, pour laquelle le rapport de la longueur de la vis au diamètre extérieur de la vis s'élève de 20 à 50, de préférence de 25 à 40.

10. Procédé selon la revendication 9, caractérisé en ce qu'on utilise un réacteur pour lequel les arbres sont constitués d'éléments de vis effectuant le transport, respectivement d'éléments de vis effectuant le transport et d'éléments de malaxage et pour lequel le temps de séjour de la masse est < 5 minutes, de préférence < 3 minutes, avec des vitesses de rotation > 10 min⁻¹ et avec un reflux axial minimal.
